# FASCICULE DE BREVET EUROPEEN

(11) **EP 1 889 388 B1**
(45) Date de publication et mention de la délivrance du brevet: **02.12.2009**
(21) Numéro de dépôt: 06764687.7
(22) Date de dépôt: 24.05.2006
(51) Int. Cl.: H04J 3/06, H04L 7/033

(54) **PROCEDE ET SYSTEME DE TRANSMISSION D'UN RYTHME DE SYNCHRONISATION SUR UN LIEN RESEAU DE TECHNOLOGIE ETHERNET ET LEUR APPLICATIONS**
VERFAHREN UND SYSTEM ZUM ÜBERTRAGEN EINER TAKTFREQUENZ ÜBER EINE ETHERNET-NETZVERBINDUNG UND ANWENDUNGEN DAVON
METHOD AND SYSTEM FOR TRANSMITTING A CLOCK RATE ON AN ETHERNET NETWORK LINK AND APPLICATIONS THEREOF

(30) Priorité: 06.06.2005 FR 0505711
(43) Date de publication de la demande: 20.02.2008
(73) Titulaire: FRANCE TELECOM, 75015 Paris (FR)
(72) Inventeur: MORLON, Yves, F-22300 Lannion (FR); DELETRE, Fabrice, F-22300 Ploumilliau (FR); LE MOULT, Olivier, F-22300 Lannion (FR); POMMEROL, Laurent, F-22300 Lannion (FR)
(74) Mandataire: Cabinet Plasseraud
(86) Numéro de dépôt international: PCT/FR2006/001195
(87) Numéro de publication internationale: WO 2006/131617

(56) Documents cités:
- US-A1- 2005 041 691

## Description

La mise en oeuvre des réseaux de transmission nécessite de disposer d'un rythme de synchronisation de certains équipements constitutifs de ces réseaux. C'est en particulier le cas des stations de base d'émission/réception UMTS pour Universal Mobile Telecommunication System en anglais, désignées node B en anglais, et de manière plus générale, de tous les équipements supportant des services ou applications en temps réel.

A l'heure actuelle, ce rythme de synchronisation est délivré par un signal de synchronisation issu d'une horloge primaire présentant une exactitude par rapport à la fréquence UTC pour Universal Time Coordinated, Temps Universel Coordonné, de 10⁻¹¹. Ce signal de synchronisation est transporté à travers les différentes parties du réseau, en particulier dans les parties coeur, collecte ou accès, via la couche de transport SDH pour Synchronous Digital Hierarchy en anglais ou éventuellement PDH pour Plesiochronous Digital Hierarchy en anglais.

L'introduction progressive mais régulière de la technologie Ethernet pour l'exécution de réseaux ou de parties de réseaux pose, maintenant, le problème du transport et de la conservation de ce rythme de synchronisation sur de tels réseaux ou parties de réseaux.

Le problème précité est susceptible de constituer un frein au déploiement de ce type de réseau, en particulier dans leur application à la collecte UMTS.

Les solutions proposées jusqu'à ce jour pour transmettre et conserver le rythme de synchronisation sont essentiellement de deux types :
- un procédé dit adaptatif, lequel consiste à récupérer le rythme d'émission en entrée du réseau à partir du rythme d'arrivée des paquets de données dans une mémoire FIFO de réception, dont la fréquence du rythme de lecture est asservie sur le niveau de remplissage de cette mémoire ;
- un procédé dit par estampille temporelle, Time stamps en anglais, lequel consiste à transférer dans la bande, c'est-à-dire dans les trames, sous forme de trois ou quatre octets, les informations relatives à l'horloge d'émission, afin de pouvoir reconstruire, à la réception, le rythme de l'horloge d'émission.

Dans le cas des deux types précités, voire dans le cas de la combinaison de ces derniers, le rythme ou signal de synchronisation reconstruit ou restitué est très dépendant de la topologie du réseau, en particulier du nombre de noeuds traversés, ainsi que des variations de la charge en trafic de ce réseau. La dépendance précitée se traduit globalement par une variation du temps de transfert des paquets, phénomène désigné latence, lorsque ces derniers traversent le réseau de bout en bout, ce qui produit des variations ou dérapages de phase, lesquels sont répercutés au niveau du rythme reconstruit.

En conséquence, le rythme reconstruit est de piètre qualité en termes de synchronisation et peut se révéler non conforme ou en limite de conformité en regard des normes ou recommandations en vigueur.

En particulier, le document US 2005/041691 décrit une solution voisine des processus de l'art antérieur précédemment cités, relative à la transmission d'un rythme de synchronisation sur un lien réseau, de type Ethernet.

Toutefois, le problème technique à résoudre est totalement différent car, dans le document précité, la génération du signal de synchronisation sur le lien réseau est consécutive à la réception d'un signal TDM (Time Division Multiplexing) communicant des données synchrones. La transmission d'un signal TDM est nécessairement synchrone, afin de permettre le multiplexage par répartition dans le temps.

La présente invention a pour objet de remédier aux inconvénients des solutions de l'art antérieur dans le cas des réseaux sièges d'un signal de rythme de débit, tels que les réseaux de type FastEthernet, Gigabit Ethernet, ou de débits supérieurs.

En particulier, un objet de la présente invention est la mise en oeuvre d'un procédé de transmission et de conservation d'un rythme de synchronisation indépendant de la topologie du réseau d'un des types précités et permettant de conserver l'exactitude de tout signal ou .rythme de synchronisation externe de référence.

Un autre objet de la présente invention est, également, la mise en oeuvre d'un système de transmission et de conservation d'un rythme de synchronisation en réseau d'un des types précités permettant de conserver l'exactitude de tout signal de synchronisation ou rythme externe de référence.

Le procédé de transmission d'un rythme de synchronisation sur un lien réseau siège d'un signal de rythme de débit initialement asynchrone, objet de l'invention, est remarquable en ce qu'il consiste au moins à synchroniser, en un point d'entrée du réseau, ce signal de rythme de débit initialement asynchrone sur un rythme de synchronisation externe de référence pour engendrer un signal de rythme de débit synchronisé se propageant sur le réseau et à extraire, en un point de sortie du réseau, ledit rythme de synchronisation externe de référence à partir dudit signal de rythme de débit synchronisé, pour utilisation.

Le procédé consiste préférentiellement à transférer ledit rythme de synchronisation, par l'intermédiaire dudit signal de rythme de débit synchronisé. Dans un mode de réalisation préféré, pour un lien réseau de type Ethernet 100 Mbit/s, 1 Gbit/s, 10 Gbit/s, le procédé consiste à synchroniser ledit signal de rythme de débit initialement asynchrone à une fréquence appartenant au groupe de fréquences 125 MHz, 1,25 GHz ou 10,3215 GHz avec un rythme de synchronisation externe de référence délivré par une horloge primaire de référence d'exactitude 10-11 UTC.

Avantageusement, suite à l'extraction externe dudit rythme de synchronisation en un point de sortie du réseau, le procédé consiste à réinjecter, en un point voisin dudit point de sortie du réseau, ledit signal de rythme de débit synchronisé sur ledit rythme de synchronisation externe extrait, ce qui permet de transmettre et de conserver ledit rythme de synchronisation externe indépendamment de la topologie du réseau.

Le système de transmission d'un rythme de synchronisation sur un lien réseau, siège d'un signal de rythme de débit, objet de l'invention, est remarquable en ce qu'il comporte au moins, aptes à être connectés en un point d'entrée de ce réseau, des moyens de synchronisation de ce signal de rythme de débit initialement asynchrone sur un rythme de synchronisation externe de référence, pour engendrer un signal de rythme de débit synchronisé se propageant sur ce réseau. Il comporte en outre, aptes à être connectés en un point de sortie de ce réseau, un module d'extraction du rythme de synchronisation externe de référence à partir du signal de rythme de débit synchronisé, pour utilisation.

Dans un mode de réalisation préféré, les moyens de synchronisation comportent au moins un signal d'horloge constitutif dudit rythme de synchronisation externe de référence, et des moyens convertisseurs de fréquence recevant ledit signal d'horloge et délivrant un signal de synchronisation à fréquence augmentée synchronisé. Avantageusement, les moyens de synchronisation comportent en outre des moyens d'asservissement de phase recevant ledit signal de synchronisation à fréquence augmentée synchronisé et délivrant ledit rythme de synchronisation, pour utilisation.

De préférence, la connexion desdits moyens de synchronisation au point d'entrée respectivement desdits moyens d'extraction au point de sortie dudit réseau est exécutée par l'intermédiaire d'un circuit sérialiseur-désérialiseur. Dans une variante avantageuse, les moyens d'extraction comportent au moins des moyens convertisseurs de fréquence recevant ledit signal de rythme de débit synchronisé et délivrant le rythme de référence externe extrait, en relation de phase avec ledit rythme de synchronisation externe de référence d'origine.

L'invention couvre en outre un commutateur pour un réseau siège d'un signal de rythme de débit, apte à être relié à un premier lien réseau siège d'un signal de rythme de débit synchronisé en un point de sortie du réseau et à un deuxième lien réseau en un point d'entrée du réseau voisin du point de sortie du réseau, ce commutateur comprenant, aptes à être connectés au point de sortie du réseau, des moyens d'extraction d'un signal de rythme de synchronisation externe à partir du signal de rythme de débit synchronisé reçu du premier lien réseau, pour utilisation, et, aptes à être connectés au point d'entrée du réseau, des moyens de réinjection adaptés pour engendrer ledit signal de rythme de débit synchronisé sur la base dudit signal de rythme de synchronisation externe extrait.

L'invention couvre aussi un commutateur pour un réseau siège d'un signal de rythme de débit, apte à être relié à un premier lien réseau siège d'un signal de rythme de synchronisation externe provenant d'une horloge de référence en un point de sortie du réseau et à un deuxième lien réseau en un point d'entrée du réseau voisin du point de sortie du réseau, ce commutateur comprenant, aptes à être connectés au point de sortie du réseau, des moyens d'extraction dudit signal de rythme de synchronisation externe reçu du premier lien réseau, pour utilisation, et, aptes à être connectés au point d'entrée du réseau, des moyens de réinjection adaptés pour engendrer un signal de rythme de débit synchronisé sur la base dudit rythme de synchronisation externe extrait.

L'invention couvre enfin un module de synchronisation d'un signal de rythme de débit initialement asynchrone d'un lien réseau sur un rythme de synchronisation externe de référence formé par un signal d'horloge pour engendrer un signal de rythme de débit synchronisé, ce module présentant une première entrée apte à recevoir ledit signal de rythme de débit initialement asynchrone, une deuxième entrée apte à recevoir le signal d'horloge et une sortie pour propager le signal de rythme de débit synchronisé sur ledit réseau, ledit module comportant au moins des moyens convertisseurs de fréquence délivrant un signal de synchronisation à fréquence plus élevée synchronisé sur ledit signal d'horloge reçu. Par ailleurs, l'invention décrit un exemple de module d'extraction du rythme de synchronisation externe de référence d'un signal de rythme de débit synchronisé sur ce rythme de synchronisation externe de référence, représenté par un signal d'horloge, remarquable en ce que ce module comporte au moins un convertisseur de fréquence recevant ce signal de rythme de débit synchronisé et délivrant un rythme de synchronisation externe de référence reconstitué, en relation de phase avec le signal de rythme de référence externe.

Les procédés, le système et les modules de synchronisation d'un rythme de débit respectivement d'extraction d'un rythme de synchronisation externe de référence, objets de l'invention, trouvent application à la mise en oeuvre de réseaux sièges d'un signal de rythme de débit, tels que les réseaux Gigabit Ethernet ou autres, implantés dans les équipements d'extrémités présents à l'extrémité de liens réseau correspondants, ou sous forme des modules de synchronisation respectivement d'extraction précités dédiés et indépendants.

Ils seront mieux compris à la lecture de la description et à l'observation des dessins ci-après dans lesquels :
- la figure 1 a représente, à titre purement illustratif, un organigramme des étapes essentielles de mise en oeuvre du procédé objet de la présente invention ;
- la figure 1b représente, à titre illustratif, un organigramme des étapes essentielles de mise en oeuvre du procédé objet de l'invention de la figure 1a, dans une variante avantageuse permettant de s'affranchir de la topologie du réseau siège d'un signal de rythme de débit ;
- la figure 2a représente, à titre illustratif, sous forme de schéma fonctionnel, un système de transmission d'un rythme de synchronisation, objet de l'invention, selon un premier mode de réalisation dans lequel un module de synchronisation respectivement un module d'extraction sont intégrés respectivement à un équipement terminal, les équipements terminaux étant reliés par un réseau siège d'un signal de rythme de débit synchronisé permettant l'extraction du signal de synchronisation externe de référence ;
- la figure 2b représente, à titre illustratif, un système de transmission d'un rythme de synchronisation objet de l'invention selon un deuxième mode de réalisation dans lequel un module de synchronisation respectivement un module d'extraction sont connectés sous forme de modules dédiés séparés à un équipement terminal et reliés par un réseau siège d'un signal de rythme de débit synchronisé permettant l'extraction du signal de synchronisation externe de référence ;
- la figure 2c représente à titre illustratif, la configuration d'un système objet de l'invention, permettant la mise en oeuvre du procédé objet de l'invention tel qu'illustré en figure 1b en totale indépendance de la topologie du réseau siège du signal de rythme de débit synchronisé ;
- la figure 3a représente, à titre illustratif, un premier exemple d'application de mise en oeuvre du procédé et/ou du système objets de l'invention, entre un équipement d'extrémité, relié à une station de base UMTS, et un commutateur de réseau Gigabit Ethernet ;
- la figure 3b représente, à titre illustratif, un deuxième exemple d'application de mise en oeuvre du procédé et/ou du système objets de l'invention entre un équipement d'extrémité, relié à une station de base UMTS et un équipement de type plateforme multiservices ou un équipement SDH.

Une description plus détaillée du procédé de transmission d'un rythme de synchronisation sur un lien réseau siège d'un signal de rythme de débit initialement asynchrone, conforme à l'objet de la présente invention, sera maintenant donnée en liaison avec les figures la et 1b.

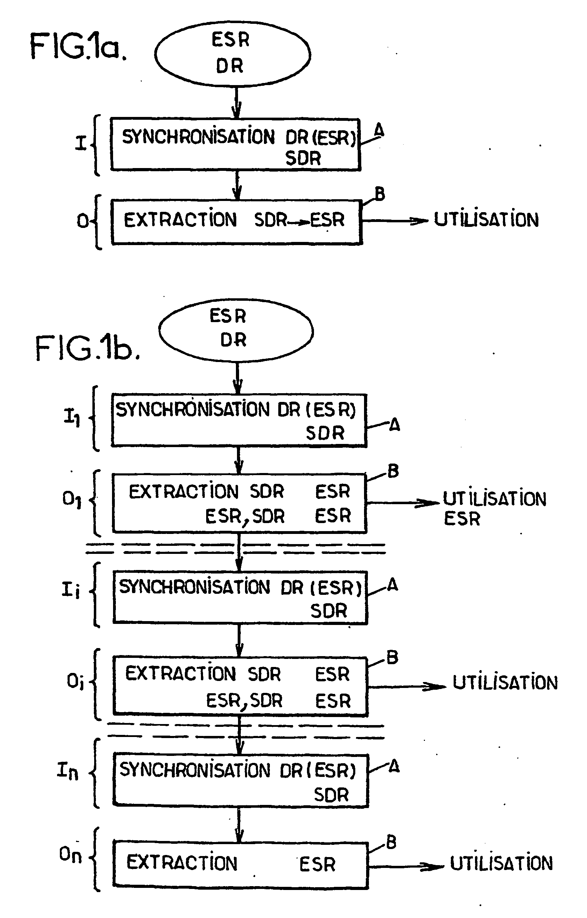

En référence à la figure 1a précitée, on indique que le procédé de transmission d'un rythme de synchronisation peut être mis en oeuvre sur tout lien réseau siège d'un signal de rythme de débit DR et en particulier sur toute liaison par réseau FastEthernet, Gigabit Ethernet ou de débit supérieur ainsi que toute liaison réseau comportant un tel signal de rythme de débit.

En référence à la figure 1a, on indique que le procédé, objet de l'invention, consiste à synchroniser en un point d'entrée du réseau noté .I le signal de rythme de débit DR sur un rythme de synchronisation externe de référence noté ESR. Cette opération est réalisée à l'étape A de la figure la et est notée :

Synchronisation DR(ESR) pour engendrer un signal de rythme de débit synchronisé SDR ce propageant sur le réseau précitée.

Le procédé, objet de l'invention, consiste ensuite en une étape B à extraire en un point de sortie O du réseau précité le rythme de synchronisation externe de référence ESR à partir du signal de rythme de débit synchronisé SDR. Le rythme de synchronisation externe ainsi restitué ESR peut alors être utilisé dans tout type d'utilisation ainsi qu'il sera décrit ultérieurement dans la description.

Selon un aspect remarquable du procédé objet de la présente invention, on indique que celui-ci consiste à transférer le rythme de synchronisation sur le réseau considéré en mode synchrone par l'intermédiaire du signal de rythme de débit synchronisé SDR.

Ainsi, le rythme de synchronisation transmis en mode synchrone sur le lien réseau est transmis de façon purement physique contrairement au procédé de l'art antérieur décrit précédemment dans la description.

Le mode opératoire du procédé objet de la présente invention et rendu possible dans la mesure où sur un lien réseau, siège d'un signal de rythme de débit tel qu'un réseau Gigabit Ethernet par exemple, il existe toujours en ligne un signal même lorsqu'aucune trame de données n'est transmise sur ce réseau, ce signal consistant en l'envoi de mots codes particuliers désignés dans le cadre de la présente demande signal de rythme de débit. On comprend dans une telle situation, pour un lien réseau précité, que le procédé objet de l'invention, consiste alors à synchroniser le signal de rythme de débit de ligne à 1,25 GHz lorsque le réseau est un réseau de type Gigabit Ethernet avec un rythme externe de référence lequel, dans ce cas, peut être délivré par une horloge primaire de référence d'exactitude 10⁻¹¹/UTC.

Suite à l'opération de synchronisation décrite à l'étape A, le procédé objet de l'invention consiste alors à l'étape B, à extraire physiquement le signal d'horloge représentatif du rythme de synchronisation externe ESR.

Le procédé, objet de la présente invention, tel que représenté en figure la est particulièrement avantageux dans la mesure où ce procédé permet non seulement de transmettre le rythme de synchronisation précité sur un lien réseau, mais encore de conserver ce rythme de synchronisation quelle que soit la topologie du réseau considéré ainsi qu'il sera décrit ci-après en liaison avec la figure 1b.

En référence à la figure précitée, on indique que suite à une opération de synchronisation en une étape A exécutée en un point d'entrée I₁ et à une opération B d'extraction exécutée en un point de sortie O₁ les étapes A, B de la figure 1b étant bien entendu identiques aux étapes A et B de la figure 1a, on procède alors à une réinjection en un point voisin du point de sortie O₁ du réseau du signal de rythme de débit synchronisé SDR sur le rythme de synchronisation externe extrait en un point voisin d'entrée noté Iᵢ sur la figure 1b.

La notion de voisinage entre point d'extraction et de réinjection recouvre celle de l'existence d'un port d'extraction respectivement d'un port d'injection des signaux respectifs sur un même équipement terminal par exemple.

Le procédé, objet de l'invention, consiste alors à exécuter une opération d'extraction en un autre point quelconque du réseau et à répéter les opérations de synchronisation en un point d'entrée et un point de sortie successifs Iᵢ, Oᵢ, ces points étant choisis de manière à assurer ainsi la transmission et la conservation du rythme de synchronisation, ce qui permet de s'af&anchir de la topologie du réseau.

On comprend bien entendu que l'opération de réinjection du signal de rythme de débit SDR peut être effectuée soit à partir du signal SDR précité soit, le cas échéant, à partir du signal de rythme de synchronisation externe de référence extrait ESR lequel peut permettre alors de reconstituer un signal de rythme de débit synchronisé SDR ainsi qu'il sera décrit ultérieurement dans la description.

Le processus peut être répété de manière successive jusqu'à un point d'entrée Iₙ et un point de sortie Oₙ pour extraction compte tenu des équipements terminaux à synchroniser.

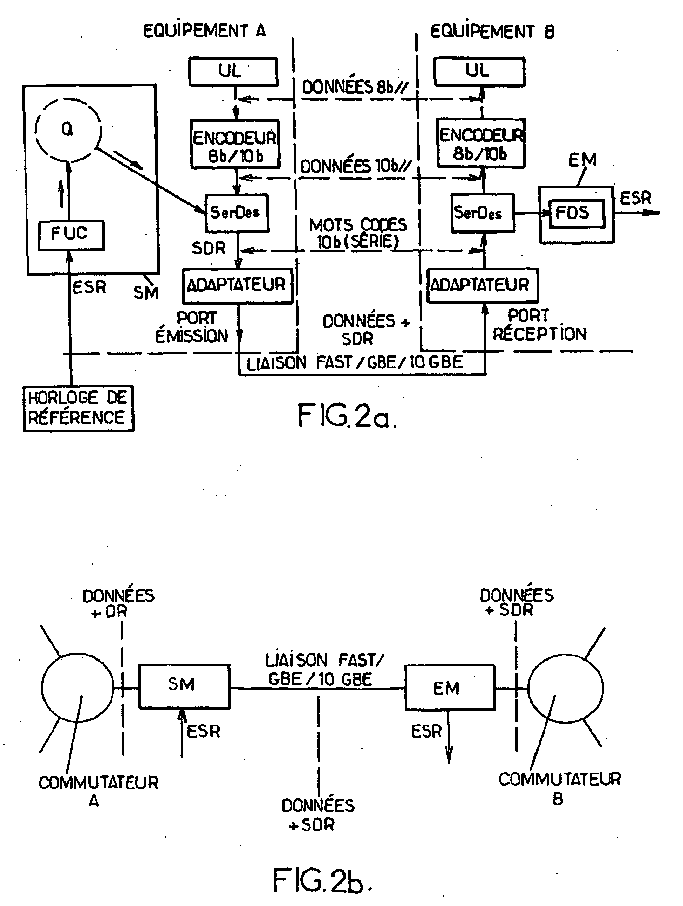

Un système de transmission d'un rythme de synchronisation sur un lien réseau, siège d'un signal de rythme de débit, conforme à l'objet de la présente invention sera maintenant décrit en liaison avec la figure 2a.

En référence à la figure 2a on indique que le système objet de l'invention, peut être implanté directement dans l'équipement d'extrémité Gigabit Ethernet présent à chacune des extrémités des liaisons choisies pour transférer le rythme de débit synchronisé sur la liaison réseau de type Gigabit Ethernet considéré.

Ainsi, en référence à la figure 2a on indique que le système objet de l'invention, comprend un module SM de synchronisation du signal de rythme de débit sur un rythme de synchronisation externe de référence ESR. Le module SM permet d'engendrer le signal de rythme de débit synchronisé SDR se propageant sur le réseau.

Sur la figure 2a on a représenté l'équipement d'extrémité A représenté par les couches supérieures de liaison réseau, notées UL, et délivrant des données 8 bits en parallèle, un encodeur 8 bits/10 bits permettant de délivrer des données 10 bits parallèles et un circuit sérialiseur-désérialiseur noté SerDes délivrant des mots codés 10 bits série à un adaptateur constitutif d'un port d'émission et en particulier de liaison par liaison réseau Gigabit Ethernet par l'intermédiaire d'un support physique ligne cuivre, optique ou autre. Le port d'émission précité est alors relié par le lien réseau à l'équipement d'extrémité B constitutif de l'autre équipement d'extrémité.

L'équipement d'extrémité B est également représenté par les couches supérieures de ce dernier UL, un encodeur 8 bits / 10 bits et un circuit sérialiseur-désérialiseur SerDes ainsi que par un adaptateur constitutif du port de réception auquel est connectée la liaison Gigabit Ethernet permettant en fait de relier l'équipement A à l'équipement B d'extrémité.

En référence à la figure 2a, le système, objet de l'invention, comporte également connecté en un point de sortie du réseau considéré un module d'extraction EM du rythme de synchronisation externe de référence à partir du signal de rythme de débit synchronisé SDR.

Sur la figure 2a, le module d'extraction EM est connecté au niveau du circuit sérialiseur-désérialiseur SerDes représentant l'équipement B d'extrémité. Le rythme de synchronisation externe de référence extrait ESR peut alors être utilisé pour des besoins de synchronisation, ce rythme de synchronisation externe de référence ESR présentant une relation de phase avec le rythme de synchronisation externe de référence d'origine ESR et en conservant toutes les qualités d'exactitude et de fréquence.

On comprend, en particulier, que la fourniture du signal de rythme (correspondant au rythme du signal SDR divisé par un facteur k) par le module de synchronisation SM au circuit sérialiseur-désérialiseur de l'équipement A permet en fait d'engendrer le signal de rythme de débit synchronisé SDR et de délivrer ce dernier au circuit adaptateur et au port d'émission pour transmission sur la ligne (Fast ou Gigabit Ethernet ou de débit supérieur) de liaison. Le signal de rythme de débit synchronisé SDR est alors transmis à l'adaptateur et au port de réception de l'équipement d'extrémité B et, en particulier, au circuit sérialiseur-désérialiseur SerDes de ce dernier et finalement au module d'extraction EM pour extraction du rythme de synchronisation externe de référence ESR.

Ainsi qu'on l'observera en outre sur la figure 2a, le module de synchronisation SM comporte, avantageusement, un signal d'horloge constitutif du rythme de synchronisation externe de référence ESR, ce signal d'horloge pouvant avantageusement être délivré par une horloge de référence délivrant, pour une mise en oeuvre concrète spécifique du système objet de la présente invention, un signal de référence à 2,048 MHz avec une exactitude de ± 10⁻¹¹/UTC.

Le module de synchronisation SM comporte en outre un circuit convertisseur de fréquence FUC, ce circuit convertisseur de fréquence procédant à un changement par élévation de la fréquence du signal d'horloge ESR et étant désigné FUC pour cette raison. Le circuit convertisseur de fréquence est ainsi un circuit multiplicateur de fréquence lequel délivre un signal de synchronisation à fréquence augmentée et synchronisée sur le rythme de synchronisation externe de référence ESR.

Le signal de synchronisation à fréquence augmentée synchronisé délivré par le circuit convertisseur FUC peut, le cas échéant, être élevé à une fréquence suffisante pour constituer le signal SDR constitutif du rythme de débit synchronisé par exemple.

Toutefois, dans un mode de mise en oeuvre préféré du système objet de la présente invention et, en particulier, du module SM de synchronisation, ce dernier comporte en outre un circuit d'asservissement de phase, noté Q, recevant le signal de synchronisation à fréquence augmentée synchronisé et délivrant le rythme de débit synchronisé au circuit sérialiseur-désérialiseur SerDes.

On comprend, en particulier, que le circuit d'asservissement de phase Q peut avantageusement être constitué par un oscillateur à quartz disponible dans l'équipement d'extrémité A et destiné normalement à assurer la génération du signal de commande du circuit sérialiseur-désérialiseur pour exécuter la transmission des données sur le lien Fast/Gigabit Ethernet et également la transmission des mots codes particuliers constitutifs du rythme de débit transmis sur la liaison réseau correspondante.

Dans cette situation, l'asservissement en phase du circuit d'asservissement de phase, c'est-à-dire en définitive du résonateur à quartz précité, permet d'assurer, d'une part, la création du rythme de débit précité et, d'autre part, la synchronisation de ce dernier sur le rythme de synchronisation externe de référence ESR, c'est-à-dire sur le signal d'horloge représentatif de ce dernier.

En ce qui concerne la mise en oeuvre du module d'extraction de rythme de référence externe EM au niveau de l'équipement d'extrémité B, on indique que de manière semblable au module de synchronisation SM précédemment décrit, celui-ci comporte avantageusement au moins un module convertisseur de fréquence désigné FDS directement relié au circuit sérialiseur-désérialiseur SerDes de l'équipement terminal B et recevant, en conséquence, le signal de rythme de débit synchronisé SDR pour délivrer par une conversion de division de fréquence par exemple, le rythme de référence externe reconstitué ESR en relation de phase avec le rythme de référence externe ESR d'origine.

Bien entendu, le mode de mise en oeuvre de la figure 2a n'est pas limitatif. On comprend en particulier que lorsque pour des raisons de coût ou pour des raisons de mise en oeuvre il n'est pas souhaitable de modifier l'équipement terminal A et/ou l'équipement terminal B, le système objet de l'invention peut, en outre, consister à implanter le module de synchronisation SM et/ou le module d'extraction EM dans un module dédié indépendant externe à chacun des équipements d'extrémité A et B précédent décrits. Ce mode de mise en oeuvre est représenté en figure 2b dans lequel l'équipement d'extrémité A est réputé constitué par un commutateur Gigabit Ethernet A et, l'équipement d'extrémité B, est réputé constitué par un commutateur Gigabit Ethernet B.

Dans cette situation, chacun des commutateurs précités est relié par une liaison Gigabit Ethernet GbE par l'intermédiaire du module de synchronisation SM de la liaison Gigabit Ethernet précitée et du module d'extraction EM ainsi que représenté sur la figure précitée. De même que dans le cas de la figure 2a, la liaison Gigabit Ethernet GbE précitée permet alors la transmission des données et du rythme de débit synchronisé SDR.

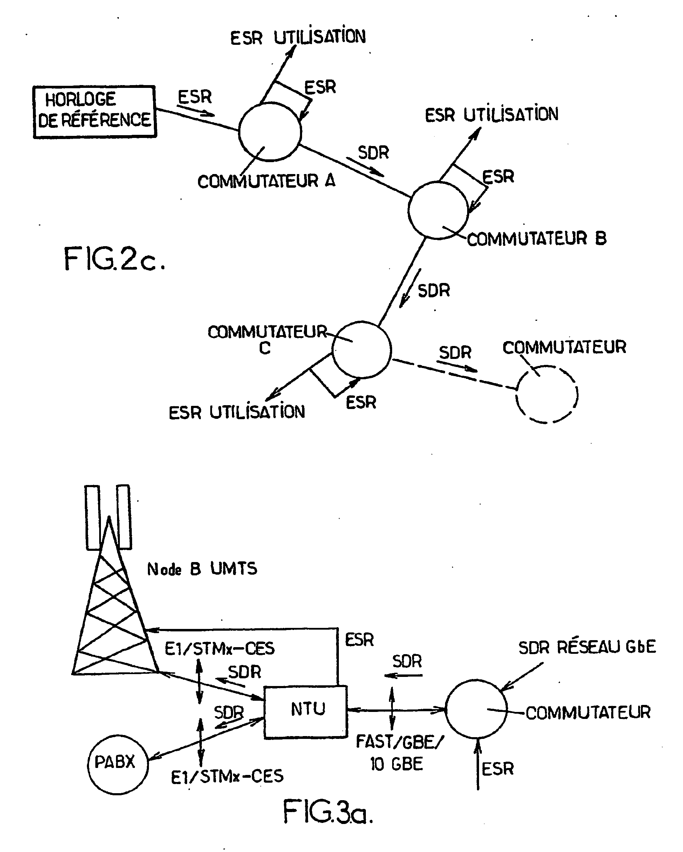

La configuration d'un réseau de type Gigabit Ethernet constituée en fait par une pluralité de liens réseau Gigabit Ethernet successifs mettant en oeuvre le procédé objet de la présente invention tel que représenté en figure 1b, est représenté en figure 2c.

Sur la figure 2c précitée, on observe que le rythme de synchronisation externe de référence ESR est injecté en premier à partir d'une horloge de référence au niveau d'un commutateur Gigabit Ethernet, commutateur GbE, qu'au niveau de ce commutateur le rythme de synchronisation externe de référence ESR est extrait pour utilisation et réinjecté au niveau de ce même commutateur pour engendrer le rythme de débit synchronisé SDR qui est alors propagé sur le réseau et, en tout cas, entre un lien réseau Gigabit Ethernet entre deux commutateurs GbE considérés. Ce processus est alors répété successivement entre commutateurs GbE délimitant des liens réseaux Gigabit Ethernet successifs. On comprend que dans cette situation, ainsi que mentionné précédemment dans la description, le rythme de synchronisation externe de référence ESR après extraction peut être réinjecté soit au niveau du commutateur GbE soit au niveau d'un point voisin de ce dernier ou que, le cas échéant, le signal SDR de rythme de débit synchronisé peut être engendré et envoyé sur le réseau ainsi que mentionné précédemment dans la description.

On comprend, en particulier, que la configuration représentée en figure 2c peut être exécutée pour les liens réseau Gigabit Ethernet dits synchronisants, les autres liens, pour lesquels la synchronisation n'est pas nécessaire, pouvant bien entendu rester asynchrones.

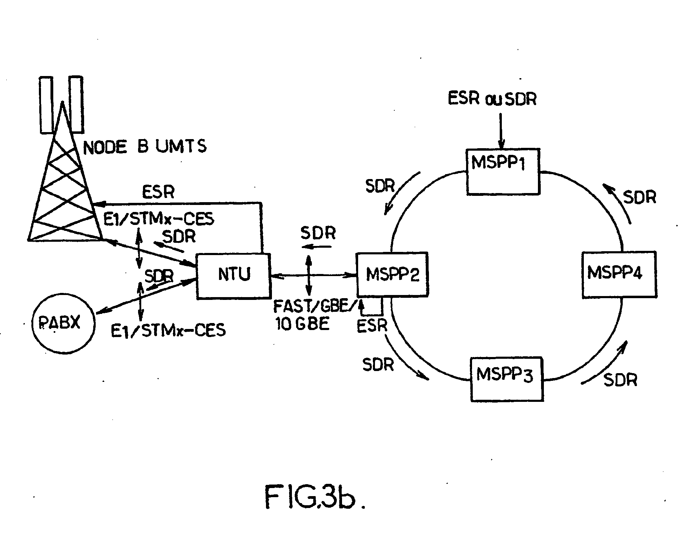

Une description plus détaillée d'applications spécifiques du procédé et du système objets de la présente invention dans leur mode de mise en oeuvre particulier seront maintenant donnés en liaison avec la figure 3a et la figure 3b.

En référence à la figure 3a, on indique que le procédé et le système objets de la présente invention peuvent être mis en oeuvre pour le transport et la conservation du rythme de référence externe pour la résolution du problème de transfert du rythme de synchronisation sur le dernier tronçon, encore désigné dernier "mile", d'une station de base UMTS.

Dans cette situation, ainsi que représenté sur la figure 3a, de manière classique, un commutateur GbE est relié par une liaison réseau GbE à un équipement d'extrémité noté NTU pour Networking Termination Unit relié à un commutateur téléphonique PABX et à la station de base UMTS notée node B UMTS.

Le commutateur GbE reçoit soit le rythme de débit synchronisé SDR par l'intermédiaire d'un réseau ou d'un lien réseau GbE soit le signal de rythme de synchronisation externe ESR. Il délivre sur un lien Gigabit Ethernet vers le module NTU équipement d'extrémité le rythme de débit synchronisé SDR. Ce dernier peut être transmis directement au commutateur PABX ou à la station de base UMTS par une liaison E1/STMx-CEs. En outre, le signal de rythme de synchronisation externe ESR peut également être transmis directement à la station de base UMTS.

La transmission du rythme de débit synchronisé SDR au commutateur PABX respectivement à la station de base UMTS est effectuée par mise à disposition par le module NTU de conduits TDME1, E3, STMx émulés. Ceci garantit que le rythme de synchronisation transféré est de qualité et conforme aux normes en vigueur car les trames TDM sont reformées à partir du rythme précité.

Le rythme de synchronisation transféré peut l'être aussi directement par l'intermédiaire du signal de référence externe ESR pour permettre la synchronisation directe d'un équipement client local par lien fréquence par exemple.

Sur la figure 3b, la configuration est semblable à celle de la figure 3a du point de vue équipement terminal NTU. Toutefois, l'équipement d'extrémité est cette fois un équipement MSPP pour une plateforme multiservices ou un équipement SDH muni d'une interface GbE.

Dans cette application, le rythme de synchronisation issu du réseau de synchronisation actuel est alors injecté de façon classique par son entrée T₃ et transporté sur ce dernier. Il est donc disponible au niveau de la base de temps de chacune des machines SDH ou MSPP de l'anneau ainsi constitué.

Grâce à la mise en oeuvre du procédé et du système, objets de la présente invention, dans cette situation il est alors aisé de récupérer le rythme de synchronisation précité afin de le transférer sur chaque interface GbE, ainsi que décrit précédemment dans la description.

## Revendications

1. Procédé de transmission d'un rythme de synchronisation sur un lien réseau siège d'un signal de rythme de débit initialement asynchrone (DR), **caractérisé en ce qu'**il consiste à :
- synchroniser (A) en un point d'entrée du réseau ledit signal de rythme de débit initialement asynchrone (DR) sur un rythme de synchronisation externe de référence (ESR) pour engendrer un signal de rythme de débit synchronisé (SDR) se propageant sur ledit réseau ;
- extraire (B) en un point de sortie du réseau ledit rythme de synchronisation externe de référence (ESR) à partir dudit signal de rythme de débit synchronisé (SDR), pour utilisation.

2. Procédé selon la revendication 1, **caractérisé en ce que** celui-ci consiste à transférer ledit rythme de synchronisation (ESR) par l'intermédiaire dudit signal de rythme de débit synchronisé (SDR).

3. Procédé selon l'une des revendications 1 ou 2, **caractérisé en ce que** pour un lien réseau de type Ethernet 100 Mbit/s, 1 Gbit/s, 10 Gbit/s, celui-ci consiste à synchroniser ledit signal de rythme de débit initialement asynchrone (DR) à une fréquence appartenant au groupe de fréquences 125 MHz, 1,25 GHz ou 10,3215 GHz avec un rythme de synchronisation externe de référence (ESR) délivré par une horloge primaire de référence d'exactitude 10⁻¹¹ UTC.

4. Procédé selon l'une des revendications 1 à 3, **caractérisé en ce que,** suite à l'extraction dudit rythme de synchronisation externe (ESR) en un point de sortie du réseau, celui-ci consiste à réinjecter, en un point voisin dudit point de sortie du réseau, ledit signal de rythme de débit synchronisé (SDR) sur ledit rythme de synchronisation externe (ESR) extrait, ce qui permet de transmettre et de conserver ledit rythme de synchronisation externe (ESR) indépendamment de la topologie du réseau.

5. Système de transmission d'un rythme de synchronisation sur un lien réseau siège d'un signal de rythme de débit initialement asynchrone (DR), **caractérisé en ce que** le système comporte au moins, aptes à être connectés en un point d'entrée dudit réseau :
- des moyens de synchronisation (SM) dudit signal de rythme de débit initialement asynchrone (DR) sur un rythme de synchronisation externe de référence (ESR), pour engendrer un signal de rythme de débit synchronisé (SDR) se propageant sur ledit réseau ; et aptes à être connectés en un point de sortie dudit réseau,
- des moyens d'extraction (EM) dudit rythme de synchronisation externe de référence (ESR) à partir dudit signal de rythme de débit synchronisé (SDR), pour utilisation.

6. Système selon la revendication 5, **caractérisé en ce que** lesdits moyens de synchronisation (SM) comportent au moins :
- un signal d'horloge constitutif dudit rythme de synchronisation externe de référence (ESR) ;
- des moyens convertisseurs de fréquence (FUC) pour recevoir ledit signal d'horloge et délivrant un signal de synchronisation à fréquence augmentée synchronisé.

7. Système selon la revendication 6, **caractérisé en ce que** lesdits moyens de synchronisation (SM) comportent en outre des moyens d'asservissement de phase (Q) pour recevoir ledit signal de synchronisation à fréquence augmentée synchronisé et délivrer ledit rythme de synchronisation (ESR) pour utilisation.

8. Système selon l'une des revendications 5 à 7, **caractérisé en ce qu'**il comprend un circuit sérialiseur-désérialiseur (Ser Des) et **en ce que** la connexion desdits moyens de synchronisation (SM) au point d'entrée respectivement desdits moyens d'extraction (EM) au point de sortie dudit réseau est exécutée par l'intermédiaire du circuit sérialiseur-desérialiseur (Ser Des).

9. Système selon l'une des revendications 5 à 8, **caractérisé en ce que** lesdits moyens d'extraction (EM) comportent au moins des moyens convertisseurs de fréquence pour recevoir ledit signal de rythme de débit synchronisé (SDR) et délivrer le rythme de référence externe (ESR) extrait, en relation de phase avec ledit rythme de synchronisation externe de référence (ESR) d'origine.

10. Commutateur (B) pour un réseau siège d'un signal de rythme de débit, apte à être relié à un premier lien réseau siège d'un signal de rythme de débit synchronisé (SDR) en un point de sortie du réseau et à un deuxième lien réseau en un point d'entrée du réseau voisin du point de sortie du réseau, **caractérisé en ce qu'**il comprend :
- aptes à être connectés au point de sortie du réseau, des moyens d'extraction d'un signal de rythme de synchronisation externe (ESR) à partir du signal de rythme de débit synchronisé (SDR) reçu du premier lien réseau, pour utilisation,
- aptes à être connectés au point d'entrée du réseau, des moyens de réinjection adaptés pour engendrer ledit signal de rythme de débit synchronisé (SDR) sur la base dudit signal de rythme de synchronisation externe (ESR) extrait.

11. Commutateur (A) pour un réseau siège d'un signal de rythme de débit, apte à être relié à un premier lien réseau siège d'un signal de rythme de synchronisation externe (ESR) provenant d'une horloge de référence en un point de sortie du réseau et à un deuxième lien réseau en un point d'entrée du réseau voisin du point de sortie du réseau, **caractérisé en ce qu'**il comprend :
- aptes à être connectés au point de sortie du réseau, des moyens d'extraction dudit signal de rythme de synchronisation externe (ESR) reçu du premier lien réseau, pour utilisation,
- aptes à être connectés au point d'entrée du réseau, des moyens de réinjection adaptés pour engendrer un signal de rythme de débit synchronisé (SDR) sur la base dudit rythme de synchronisation externe (ESR) extrait.

12. Module de synchronisation (SM) d'un signal de rythme de débit initialement asynchrone (DR) d'un lien réseau sur un rythme de synchronisation externe de référence formé par un signal d'horloge (ESR) pour engendrer un signal de rythme de débit synchronisé (SDR), ledit module (SM) présentant une première entrée apte à recevoir ledit signal de rythme de débit initialement asynchrone (DR), une deuxième entrée apte à recevoir le signal d'horloge (ESR) et une sortie pour propager le signal de rythme de débit synchronisé (SDR) sur ledit réseau, ledit module (SM) comportant au moins des moyens convertisseurs de fréquence (FUC) pour délivrer un signal de synchronisation à fréquence plus élevée synchronisé sur ledit signal d'horloge (ESR) reçu.

## Claims

1. Method for transmitting a synchronizing rate on a network link accommodating an initially asynchronous rate timing signal (DR), **characterized in that** it consists in:
- synchronizing (A) at an input point on the network said initially asynchronous rate timing signal (DR) on an external reference synchronizing rate (ESR) in order to generate a synchronized rate timing signal (SDR) propagating on said network;
- extracting (B) at an output point on the network said external reference synchronizing rate (ESR) from said synchronized rate timing signal (SDR), in order to use it.

2. Method according to Claim 1, **characterized in that** it consists in transferring said synchronizing rate (ESR), via said synchronized rate timing signal (SDR).

3. Method according to either Claim 1 or Claim 2, **characterized in that,** for a 100 Mbit/s, 1 Gbit/s, 10 Gbit/s Ethernet network link, it consists in synchronizing said initially asynchronous rate timing signal (DR) at a frequency belonging to the group of frequencies 125 MHz, 1.25 GHz or 10.3215 GHz with an external reference synchronizing rate (ESR) delivered by a primary reference clock having an accuracy of 10⁻¹¹ UTC.

4. Method according to one of Claims 1 to 3,
**characterized in that,** following the external extraction of said synchronizing rate (ESR) at an output point on the network, it consists in reinjecting, at a point nearby said output point of the network, said rate timing signal (SDR) synchronized on said extracted external synchronizing rate (ESR), thereby providing for transmitting and preserving said external synchronizing rate (ESR) independently of the network topology.

5. System for transmitting a synchronizing rate on a network link accommodating an initially asynchronous rate timing signal (DR), **characterized in that** the system includes at least, designed to be connected at an input point on said network:
- means (SM) for synchronizing said initially asynchronous rate timing signal (DR) on an external reference synchronizing rate (ESR), in order to generate a synchronized rate timing signal (SDR) propagating on said network; and designed to be connected at an output point on said network,
- means (EM) for extracting said external reference synchronizing rate (ESR) from said synchronized rate timing signal (SDR), in order to use it.

6. System according to Claim 5, **characterized in that** said synchronizing means (SM) include at least:
- one clock signal forming said external reference synchronizing rate (ESR);
- frequency converter means (FUC) for receiving said clock signal and delivering a synchronized higher-frequency synchronizing signal.

7. System according to Claim 6, **characterized in that** said synchronizing means (SM) also include phase-locking means (Q) for receiving said synchronized higher-frequency synchronizing signal and delivering said synchronizing rate (ESR) in order to use it.

8. System according to one of Claims 5 to 7,
**characterized in that** it includes a seralizer-deserializer circuit (SerDes) and **in that** the connection of said synchronizing means (SM) to the input point, or, respectively, of said extracting means (EM) to the output point on said network, is carried out via the serializer-deserializer circuit (SerDes).

9. System according to one of Claims 5 to 8,
**characterized in that** said extracting means (EM) include at least frequency converter means for receiving said synchronized rate timing signal (SDR) and delivering the extracted external reference rate (ESR) having a phase relationship with said original external reference synchronizing rate.

10. Switch (B) for a network accommodating a rate timing signal, designed to be connected at a first network link accommodating a synchronized rate timing signal (SDR) at an output point on the network and at a second network link at an input point on the network nearby the output point of the network, **characterized in that** it comprises:
- designed to be connected at the output point on the network, means for extracting an external synchronizing rate timing signal (ESR) from the synchronized rate timing signal (SDR) received from the first network link, in order to use it,
- designed to be connected at the input point on the network, reinjection means suitable for generating said synchronized rate timing signal (SDR) on the basis of said extracted external synchronizing rate timing signal (ESR).

11. Switch (A) for a network accommodating a rate timing signal, designed to be connected at a first network link accommodating an external synchronizing rate timing signal (ESR) originating from a reference clock at an output point of the network and at a second network link at an input point on the network nearby the output point of the network, **characterized in that** it comprises:
- designed to be connected at the output point on the network, means for extracting said external synchronizing rate timing signal (ESR) received from the first network link, in order to use it,
- designed to be connected at the input point on the network, reinjection means suitable for generating a synchronized rate timing signal (SDR) on the basis of said extracted external synchronizing rate (ESR).

12. Module (SM) for synchronizing an initially asynchronous rate timing signal (DR) on a network link on an external reference synchronizing rate formed by a clock signal (ESR) in order to generate a synchronized rate timing signal (SDR), said module (SM) exhibiting a first input designed to receive said initially asynchronous rate timing signal (DR), a second input designed to receive the clock signal (ESR) and an output for propagating the synchronized rate timing signal (SDR) over said network, said module (SM) comprising at least frequency converter means (FUC) for delivering a higher-frequency synchronizing signal synchronized on said clock signal (ESR) received.

## Patentansprüche

1. Verfahren zur Übertragung eines Synchronisationstakts auf einer Netzverbindung, die Sitz eines anfangs asynchronen Übertragungsrate-Taktsignals (DR) ist, **dadurch gekennzeichnet, dass** es darin besteht:
- an einem Eingangspunkt des Netzes das anfangs asynchrone Übertragungsrate-Taktsignal (DR) auf einen externen Bezugs-Synchronisationstakt (ESR) zu synchronisieren (A), um ein synchronisiertes Übertragungsrate-Signal (SDR) zu erzeugen, das sich in dem Netz ausbreitet;
- an einem Ausgangspunkt des Netzes den externen Bezugs-Synchronisationstakt (ESR) ausgehend von dem synchronisierten Übertragungsrate-Taktsignal (SDR) zu entnehmen (B), zur Verwendung.

2. Verfahren nach Anspruch 1, **dadurch gekennzeichnet, dass** es darin besteht, den Synchronisationstakt (ESR) mittels des synchronisierten Übertragungsrate-Taktsignals (SDR) zu übertragen.

3. Verfahren nach einem der Ansprüche 1 oder 2,
**dadurch gekennzeichnet, dass** es für eine Netzverbindung vom Typ Ethernet 100 Mbit/s, 1 Gbit/s, 10 Gbit/s darin besteht, das anfangs asynchrone Übertragungsrate-Taktsignal (DR) auf eine Frequenz, die zu der Frequenzgruppe 125 MHz, 1,25 GHz oder 10,3215 GHz gehört, mit einem externen Bezugs-Synchronisationstakt (ESR) zu synchronisieren, der von einem primären Bezugs-Taktgeber einer Genauigkeit von 10⁻¹¹ UTC geliefert wird.

4. Verfahren nach einem der Ansprüche 1 bis 3,
**dadurch gekennzeichnet, dass** es nach der externen Entnahme des Synchronisationstakts (ESR) an einem Ausgangspunkt des Netzes darin besteht, an einem dem Ausgangspunkt des Netzes benachbarten Punkt das synchronisierte Übertragungsrate-Taktsignal (SDR) auf dem entnommenen externen Synchronisationstakt (ESR) wieder einzuspeisen, was es ermöglicht, den externen Synchronisationstakt (ESR) unabhängig von der Topologie des Netzes zu übertragen und beizubehalten.

5. System zur Übertragung eines Synchronisationstakts auf einer Netzverbindung, die Sitz eines anfangs asynchronen Übertragungsrate-Taktsignals (DR) ist, **dadurch gekennzeichnet, dass** das System fähig, an einem Eingangspunkt des Netzes verbunden zu werden, mindestens aufweist:
- Einrichtungen zur Synchronisation (SM) des anfangs asynchronen Übertragungsrate-Taktsignals (DR) auf einen externen Bezugs-Synchronisationstakt (ESR), um ein synchronisiertes Übertragungsrate-Taktsignal (SDR) zu erzeugen, das sich im Netz ausbreitet; und fähig, an einem Ausgangspunkt des Netzes verbunden zu werden,
- Einrichtungen zur Entnahme (EM) des externen Bezugs-Synchronisationstakts (ESR) ausgehend von dem synchronisierten Übertragungsrate-Taktsignal (SDR), zur Verwendung.

6. System nach Anspruch 5, **dadurch gekennzeichnet, dass** die Synchronisationseinrichtungen (SM) mindestens aufweisen:
- ein den externen Bezugs-Synchronisationstakt (ESR) bildendes Taktgebersignal;
- Frequenzumwandlungseinrichtungen (FUC), um das Taktgebersignal zu empfangen und ein synchronisiertes Synchronisationssignal mit erhöhter Frequenz zu liefern.

7. System nach Anspruch 6, **dadurch gekennzeichnet, dass** die Synchronisationseinrichtungen (SM) außerdem Phasenregelungseinrichtungen (Q) aufweisen, um das synchronisierte Synchronisationssignal mit erhöhter Frequenz zu empfangen und den Synchronisationstakt (ESR) zu liefern, zur Verwendung.

8. System nach einem der Ansprüche 5 bis 7, **dadurch gekennzeichnet, dass** es eine Parallel-Serien/Serien-Parallel-Umsetzungsschaltung (Ser Der) aufweist, und dass die Verbindung der Synchronisationseinrichtungen (SM) mit dem Eingangspunkt der Entnahmeeinrichtungen (EM) am Ausgangspunkt des Netzes mittels der Parallel-Serien/Serien-Parallel-Umsetzungsschaltung (Ser Des) durchgeführt wird.

9. System nach einem der Ansprüche 5 bis 8, **dadurch gekennzeichnet, dass** die Entnahmeeinrichtungen (EM) mindestens Frequenzumwandlungseinrichtungen aufweisen, um das synchronisierte Übertragungsrate-Taktsignal (SDR) zu empfangen und den entnommenen externen Bezugstakt (ESR) in Phasenbeziehung mit dem ursprünglichen externen Bezugs-Synchronisationstakt (ESR) zu liefern.

10. Schalter (B) für ein Netz, das Sitz eines Übertragungsrate-Taktsignals ist, geeignet, um mit einer ersten Netzverbindung, die Sitz eines synchronisierten Übertragungsrate-Taktsignals (SDR) ist, an einem Ausgangspunkt des Netzes und mit einer zweiten Netzverbindung an einem Eingangspunkt des Netzes verbunden zu werden, der dem Ausgangspunkt des Netzes benachbart ist, **dadurch gekennzeichnet, dass** er enthält:
- fähig, mit dem Ausgangspunkt des Netzes verbunden zu werden, Einrichtungen zur Entnahme eines externen Synchronisations-Taktsignals (ESR) ausgehend von dem synchronisierten Übertragungsrate-Taktsignal (SDR), das von der ersten Netzverbindung empfangen wird, zur Verwendung,
- fähig, mit dem Eingangspunkt des Netzes verbunden zu werden, Einrichtungen zur Wiedereinspeisung, die geeignet sind, um das synchronisierte Übertragungsrate-Taktsignal (SDR) auf der Basis des entnommene externen Synchronisations-Taktsignals (ESR) zu erzeugen.

11. Schalter (A) für ein Netz, das Sitz eines Übertragungsrate-Taktsignals ist, geeignet, um mit einer ersten Netzverbindung, die Sitz eines externen Synchronisations-Taktsignals (ESR) ist, das von einem Bezugs-Taktgeber kommt, an einem Ausgangspunkt des Netzes und mit einer zweiten Netzverbindung an einem Eingangspunkt des Netzes verbunden zu werden, der dem Ausgangspunkt des Netzes benachbart ist, **dadurch gekennzeichnet, dass** er enthält:
- fähig, mit dem Ausgangspunkt des Netzes verbunden zu werden, Einrichtungen zur Entnahme des externen Synchronisations-Taktsignals (ESR), das von der ersten Netzverbindung empfangen wird, zur Verwendung,
- fähig, mit dem Eingangspunkt des Netzes verbunden zu werden, Einrichtungen zur Wiedereinspeisung, die geeignet sind, um ein synchronisiertes Übertragungsrate-Taktsignal (SDR) auf der Basis des entnommenen externen Synchronisations-Taktsignals (ESR) zu erzeugen.

12. Modul zur Synchronisation (SM) eines anfangs asynchronen Übertragungsrate-Taktsignals (DR) einer Netzverbindung auf einen externen Bezugs-Synchronisationstakt, der von einem Taktgebersignal (ESR) geformt wird, um ein synchronisiertes Übertragungsrate-Taktsignal (SDR) zu erzeugen, wobei der Modul (SM) einen ersten Eingang, der das anfangs asynchrone Übertragungsrate-Taktsignal (DR) empfangen kann, einen zweiten Eingang, der das Taktgebersignal (ESR) empfangen kann, und einen Ausgang aufweist, um das synchronisierte Übertragungsrate-Taktsignal (SDR) in dem Netz auszubreiten, wobei der Modul (SM) mindestens Frequenzumwandlungseinrichtungen (FUC) aufweist, um ein Synchronisationssignal mit höherer Frequenz zu liefern, das auf das empfangene Taktgebersignal (ESR) synchronisiert ist.
